# EUROPÄISCHE PATENTSCHRIFT

(11) **EP 2 944 518 B1**
(45) Veröffentlichungstag und Bekanntmachung des Hinweises auf die Patenterteilung: **14.06.2017**
(21) Anmeldenummer: 15167329.0
(22) Anmeldetag: 12.05.2015
(51) Int. Cl.: B60R 11/02, B60K 37/04

(54) **MODULGEHÄUSE UND BEDIENANORDNUNG MIT EINEM MODULGEHÄUSE**
MODULE HOUSING AND OPERATING ASSEMBLY WITH A MODULE HOUSING
BOÎTIER DE MODULE ET SYSTÈME DE COMMANDE DOTÉ D'UN BOÎTIER DE MODULE

(30) Priorität: 16.05.2014 DE 102014007237
(43) Veröffentlichungstag der Anmeldung: 18.11.2015
(73) Patentinhaber: Leopold Kostal GmbH & Co. KG, 58513 Lüdenscheid (DE); Bayerische Motoren Werke Aktiengesellschaft, 80809 München (DE)
(72) Erfinder: Bleckmann, Michael, 58239 Schwerte (DE); Kaminski, Dean, 44227 Dortmund (DE); Miedl, Florian, 80803 München (DE); Tille, Thomas, 81249 München (DE)
(74) Vertreter: Kerkmann, Detlef

(56) Entgegenhaltungen:
- DE-A1- 19 614 781
- US-A- 5 366 186
- US-B1- 6 760 228

## Beschreibung

Die Erfindung betrifft eine Bedienanordnung mit einem Modulgehäuse und mit einem Einschubträger, mit mindestens einer aus dem Modulgehäuse ragenden Rastfeder, durch die das Modulgehäuse mit dem Einschubträger verriegelbar ist, und die zum Einschieben des Modulgehäuses in den Einschubträger und zum Entriegeln in das Modulgehäuse versenkbar ist, wobei die Rastfeder an einen Schieber gekoppelt ist, der an dem Modulgehäuse gelagert ist und gegen die Kraft eines Federelements in der Einschubrichtung des Modulgehäuses verschiebbar ist. Die Erfindung betrifft außerdem die vorteilhafte Ausgestaltung eines Modulgehäuses für eine derartige Bedienanordnung.

Eine derartige Bedienanordnung, nach dem Oberbegriff des Anspruchs 1, wird in der deutschen Offenlegungsschrift DE 196 14 781 A1 beschrieben.

Ein Modulgehäuse mit einer Rastfeder ist aus der deutschen Patentschrift DE 100 36 853 C2 bekannt. Das in diesem Dokument beschriebene Gehäuse ist insbesondere für ein Autoradio vorgesehen und der Einschubträger ist als Einbaurahmen oder Einbauschacht für das Autoradio beschrieben. Durch die Drehung eines Exzenters kann die Rastfeder in verschiedene Positionen bewegt werden, in denen sie entweder zum Verriegeln des Gehäuses mit dem Einschubrahmen aus dem Gehäuse herausragt oder in der sie zum Entriegeln im Gehäuse versenkt ist.

Bedienanordnungen von elektrischen Geräten oder auch von Kraftfahrzeugen weisen oftmals Bedienblenden mit einer Vielzahl von Anzeige- und Schaltelementen auf. Moderne Bedienblenden besitzen häufig eine ebene Bedienfläche, bei denen Anzeige- und Schaltelemente auf der Rückseite montiert sind. Die Schaltelemente sind dabei vorzugsweise als kontaktlose Berührungssensoren ausgeführt.

Bei der nachfolgend beschriebenen Bedienanordnung erfolgt eine Berührungserkennung über kapazitive Sensorelemente, die an der Außenseite eines Modulgehäuses angeordnet sind. Wichtig für die zuverlässige Funktion einer derartigen Sensorik ist die spaltfreie Ankopplung der Sensorelemente an die Rückseite der Bedienblende. Eine kapazitive Sensorik reagiert üblicherweise sehr empfindlich auf Abstandsänderungen zwischen den Sensorelementen und der Bedienblende. Hierbei sind besonders Luftstrecken aufgrund der im Vergleich zu Kunststoff sehr geringen relativen Permittivität von Luft nachteilig für eine störungsfreie Funktion der Sensoren.

Es stellte sich die Aufgabe, eine Bedienanordnung zu schaffen, bei der ein Modulgehäuse auf kostengünstige und montagetechnisch einfache Weise spaltfrei an die Bedienblende anfügbar ist.

Diese Aufgabe wird erfindungsgemäß durch die kennzeichnenden Merkmale des Anspruchs 1 gelöst.

Das Verschieben des Schiebers erfolgt durch eine Druckeinwirkung nach dem Einsetzen des Modulgehäuses in einen Einschubträger, der einen Rahmen oder Schacht für das Modulgehäuse ausbildet. Der Einschubträger weist wenigstens eine Ausnehmung oder Hinterschneidung auf, in die ein mit der Rastfeder verbundene Rasthaken formschlüssig eingreifen kann.

Durch die Bewegung des Schiebers wird ein Federelement gespannt, welches durch seine zwischen Modulgehäuse und Schieber wirkende Federkraft den Schieber in seine Ursprungsposition zurückzutreiben versucht. Dies ist aber wegen des mit dem Schieber verbundenen Rasthakens, der am Geräteträger eingehakt ist, nicht möglich, so dass umgekehrt eine Kraftwirkung auf das Modulgehäuse entsteht, die das Modulgehäuse gegen die Rückseite der Bedienblende drückt.

Ein ausreichend stark dimensioniertes Federelement vorausgesetzt, wird so die der Bedienblende zugewandte Stirnfläche des Modulgehäuses dicht und spaltfrei an die Rückseite der Bedienblende angekoppelt. Zugleich werden dabei Fertigungstoleranzen des Modulgehäuses, des Einschubträgers und der der Federmechanik selbsttätig ausgeglichen.

Die Kraft des Federelements auf den Rasthaken stellt vorteilhafterweise auch bei geometrieverändernden Einflüssen durch Klima, Fahrbetrieb oder Betätigung immer die Spaltfreiheit zwischen dem Modulgehäuse und der Bedienblende sicher.

Das vorgeschlagene Modulgehäuse kann so mit einem vergleichsweise geringen Bauteile- und Montageaufwand spaltfrei an der Rückseite einer Bedienblende angeordnet werden.

Wenn der mindestens eine Schieber metallisch ausgeführt ist, kann seine Geometrie so gestaltet sein, dass über den Schieber auch eine elektrische Verbindung von Komponenten der Modulelektronik zu Metallapplikationen der Bedienblende hergestellt werden kann. Dies ermöglicht beispielsweise störende Einflüsse derartiger Metallapplikationen durch eine Anbindung der Modulelektronik an ein Massepotential zu verringern.

In Folgenden soll das Funktionsprinzip und ein Ausführungsbeispiel der Erfindung anhand der Zeichnung dargestellt und näher erläutert. Es zeigen
- Figuren 1 bis 3: verschiedene Ansichten eines Modulgehäuses,
- Figur 4: einen Schieber als Einzelteil,
- Figuren 5 bis 10: schematische Ansichten eines Modulgehäuses und einer Bedienblende als Einzelteile und in verschiedenen Montagephasen zur Herstellung einer Bedienanordnung.

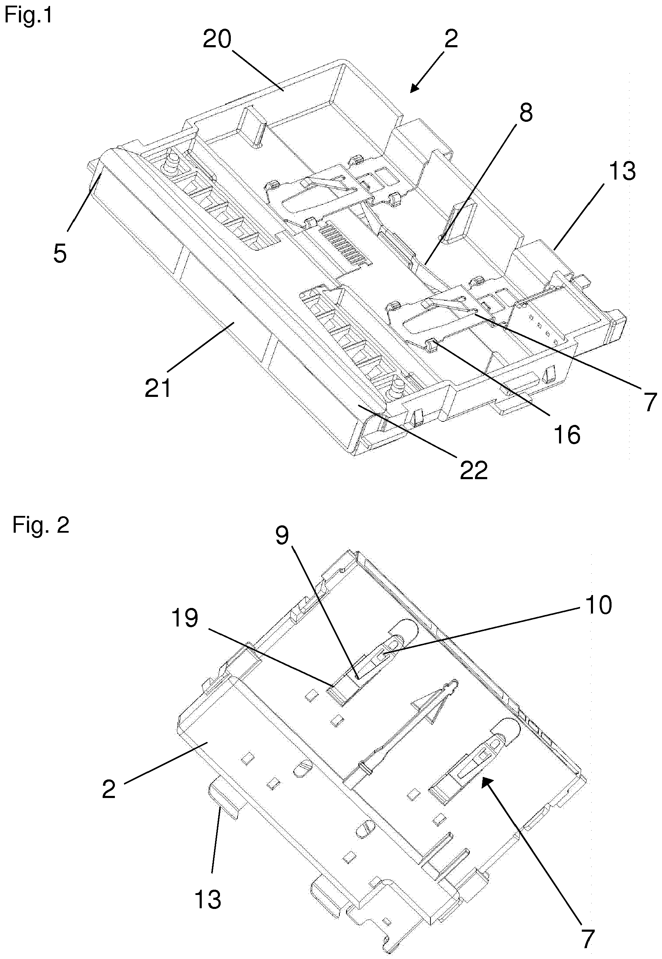

Die Figur 1 zeigt eine erste Ansicht eines Modulgehäuses 2. Das Modulgehäuse 2 ist ohne eine Abdeckung dargestellt, wodurch im Inneren des Modulgehäuses 2 zwei Schieber 7 erkennbar sind, die an Führungselementen 16 verschieblich gelagert sind.

Über Durchbrüche an der Rückseite des Modulgehäuses 2 sind Endabschnitte der Schieber 7 zugänglich, welche Betätigungsflächen 13 ausbilden. Durch Krafteinwirkungen auf die Betätigungsflächen 13, beispielsweise durch manuelle Druckbetätigungen, können die an den Führungselementen 16 gelagerten Schieber 7 gegen den Gehäusekörper 20 des Modulgehäuses 2 verschoben werden, wodurch Federelemente 8, die hier einstückig als Blattfeder dargestellt sind, gespannt werden.

An der vorderen Stirnwand 5 des Modulgehäuses 2 liegt ein flexibler Schaltungsträger 22 an, auf dem mehrere kapazitive Sensorelemente 21 erkennbar sind. Die Sensorelemente 21 dienen zur ortsauflösenden Erfassung von Berührungen der Bedienfläche einer hier nicht dargestellten Bedienblende. Um eine zuverlässige Funktion der Sensorik sicherzustellen, ist es erforderlich, die Stirnwand 5 des Modulgehäuses 2 mit den darauf befindlichen Sensorelementen 21 möglichst eng an die Rückseite der Bedienblende anzukoppeln.

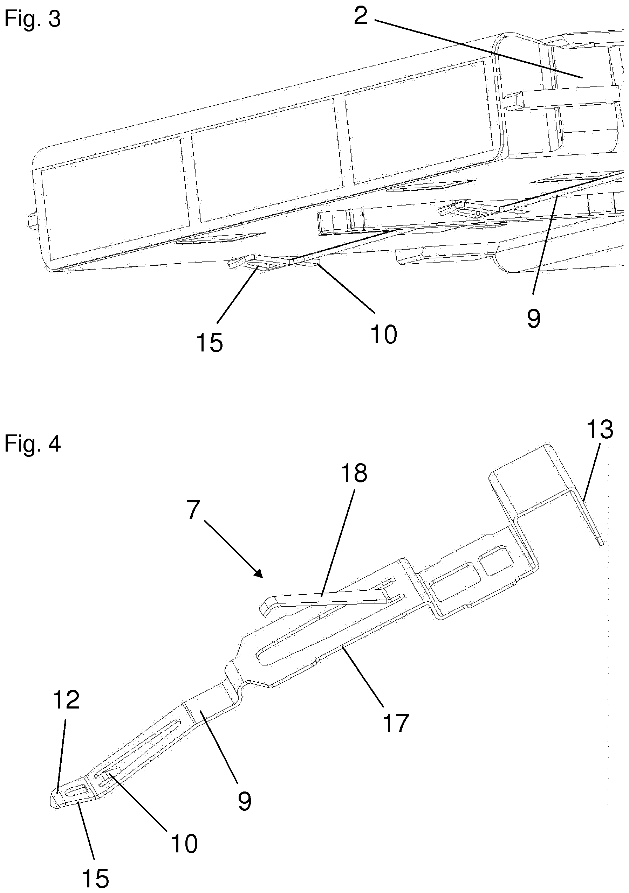

Ein Schieber 7 als Einzelteil ist in der Figur 4 abgebildet. Der Schieber 7 ist einstückig aus Kunststoff oder Metall gefertigt und weist einen Grundkörper 17 auf, der innerhalb des in der Figur 1 dargestellten Modulgehäuses 2 von den Führungselementen 16 gehalten wird. Mit dem Grundkörper 17 ist über einen abgewinkelten Abschnitt die Betätigungsfläche 13 verbunden. Auf der entgegengesetzten Seite ist an den Grundkörper 17 eine Rastfeder 9 angeformt, welche an ihrem vorderen Abschnitt einen Rasthaken 10 und eine Anlaufschräge 15 aufweist.

Bei einem aus Metall bestehenden Schieber 7 kann die Anlaufschräge 15 zugleich ein elektrisches Kontaktelement 12 ausbilden, welches beispielsweise eine Masseverbindung herstellen kann, die über eine an den Schieber 7 angeformte Kontaktfeder 18 beispielsweise an einen in der Zeichnung nicht dargestellten Schaltungsträger weitergeführt wird.

Eine Ansicht der Unterseite des Modulgehäuses 2 zeigt die Figur 2. Erkennbar sind die Rastfedern 9 der beiden Schieber 7, welche jeweils einen angeformten Rasthaken 10 aufweisen. Die Rastfedern 9 ragen in ihrer unbelasteten Grundstellung aus schlitzförmigen Ausnehmungen 19 an der Unterseite des Modulgehäuses 2 hervor. Da die Rastfedern 9 nicht am Modulgehäuse 2 geführt sind, sind sie gegen die Grundkörper 17 der Schieber 7 ein Stück weit elastisch verschwenkbar. Das Modulgehäuse 2 mit den Rastfedern 9 und den daran angeformten Rasthaken 10 ist aus einer anderen Perspektive in der Figur 3 dargestellt.

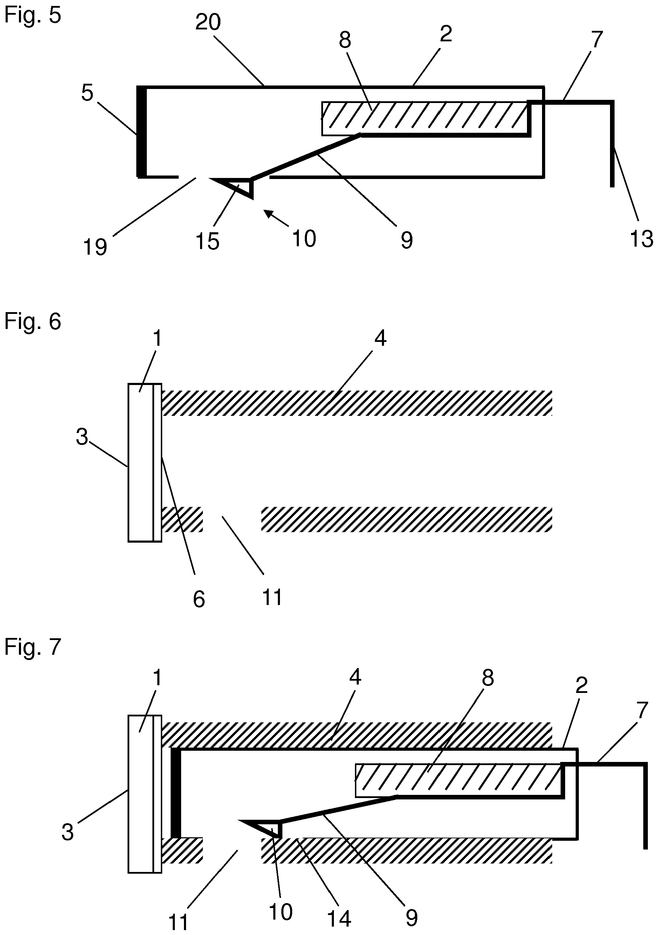

Die Montage des in den Figuren 1 bis 3 abgebildeten Modulgehäuses 2 an eine bisher nicht dargestellte Bedienblende soll nachfolgend durch die schematischen Darstellungen der Figuren 5 bis 10 verdeutlicht werden. Dabei werden für gleichartige beziehungsweise gleichwirkende Teile die bereits in den Figuren 1 bis 4 verwendeten Bezugszeichen übernommen. Eine Berührungssensorik mit kapazitiven Sensorelementen, die vorzugsweise Bestandteil des Modulgehäuses 2 ist, ist zur besseren Übersicht in den Figuren 5 bis 10 nicht dargestellt.

Die Figur 5 zeigt stark vereinfacht ein Modulgehäuse 2, dessen Darstellung auf einen äußeren Gehäusekörper 20 und einige Befestigungselemente reduziert ist. Zu letzteren gehört ein Federelement 8, welches hier als eine Schraubenfeder skizziert ist und das in der Figur 1 als eine Blattfeder mit gleichartiger Funktion dargestellt ist. Das Federelement 8 ist einerseits mit dem Gehäusekörper 20 des Modulgehäuses 2 gekoppelt und wirkt andererseits auf den Schieber 7. Durch eine manuell oder maschinell ausgeübte Druckeinwirkung auf die Betätigungsfläche 13 kann der Schieber 7 gegen das Modulgehäuse 2 verschoben werden, wobei zugleich das Federelement 8 gespannt wird.

Eine mit dem Schieber 7 zumindest mechanisch gekoppelte oder vorzugsweise einstückig mit dem Schieber 7 ausgeführte Rastfeder 9 weist einen angeformten Rasthaken 10 auf, der abschnittsweise aus einer Ausnehmung 19 des Modulgehäuses 2 herausragt. Der Rasthaken 10 bildet hier zugleich eine Anlaufschräge 15 aus; in der realitätsnäheren Darstellung der Figur 4 ist diese Anlaufschräge 15 als ein mit dem Rasthaken 10 verbundenes Einzelteil dargestellt.

Das Modulgehäuse 2 kann passgenau in einen Einschubträger 4 eingefügt werden, der in der Figur 6 mit einer Bedienblende 1 verbunden skizziert ist. Die Bedienblende 1 besteht im einfachsten Fall aus einem im Vergleich zu seiner Flächenausdehnung dünnen Körper, dessen Vorderseite eine im Wesentlichen ebene Bedienfläche 3 ausbildet. Die Bedienfläche 3 kann beispielsweise durch einen Teil der Oberfläche des Armaturenbretts in einem Kraftfahrzeug oder auch durch einen Teil der Außenfläche eines Gerätegehäuses realisiert sein.

Es sei angenommen, dass die Stirnwand 5 des Modulgehäuses 2 hier nicht dargestellte Sensorelemente und/oder Anzeigeelemente aufweist, welche zur Sicherstellung einer einwandfreien Funktion und Erkennbarkeit möglichst dicht an die Fläche 6 an der Rückseite der Bedienblende 1 angefügt werden sollen. Besonders Berührungssensoren, die nach einem kapazitiven Wirkprinzip funktionieren, können schon durch kleine Luftstrecken im Betätigungsweg erheblich in ihrer Funktion beeinträchtigt werden.

Zur Befestigung des Modulgehäuses 2 an der Bedienblende 1 ist ein rahmen- oder schachtartiger Einschubträger 4 vorgesehen, der im hier vereinfacht durch zwei parallelen Flächen skizziert ist, zwischen die das Modulgehäuse 2 einschiebbar ist. Für jeden am Modulgehäuse 2 angeordneten Schieber 7 weist das Modulgehäuses 2 einen Hinterschnitt oder eine Rastausnehmung 11 auf, in den/die eine mit dem Schieber 7 einstückig ausgebildete oder mit dem Schieber 7 mechanisch gekoppelte Rastfeder 10 eingefügt werden kann.

Die Figur 7 zeigt einen Montageschritt beim Zusammenfügen von Modulgehäuse 2 und Bedienblende 1. Das Modulgehäuse 2 ist hier schon ein Stück weit aber noch nicht vollständig in den Einschubträger 4 eingeschoben. Während des Einfügevorgangs läuft der aus dem Modulgehäuse 2 hervorstehende Rasthaken 10 mit seiner Anlaufschräge 15 gegen eine Gehäusekante des Einschubträgers 4 und wird dadurch in das Innere des Modulgehäuses 2 gedrückt. Beim weiteren Einschieben gleitet der Rasthaken 10 an der Innenwand 14 des Einschubträgers 4 entlang.

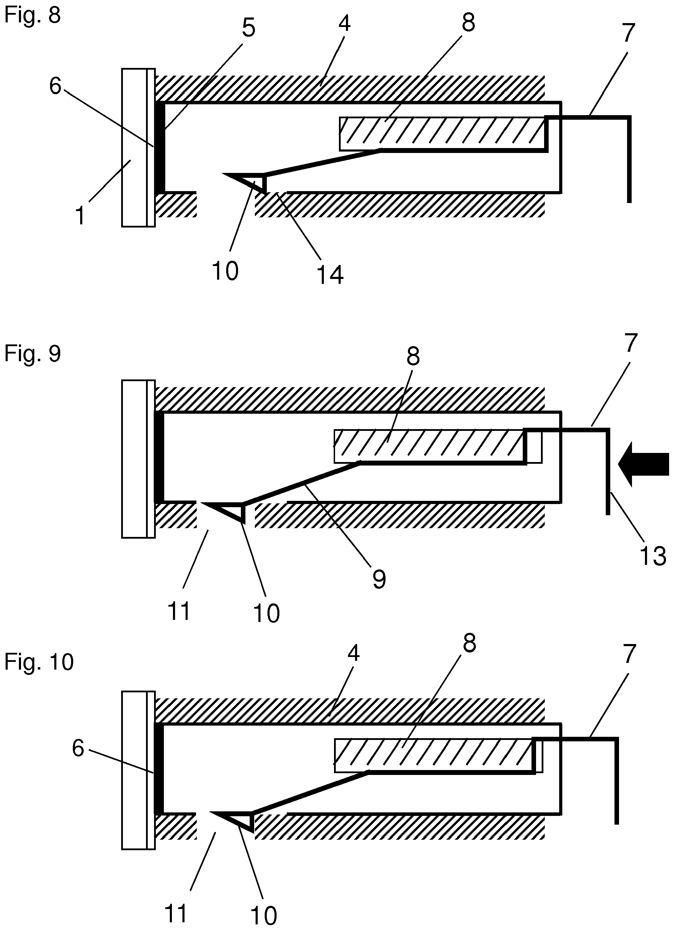

Auch nachdem die Stirnwand 5 die Fläche 6 an der Rückseite der Bedienblende 1 erreicht hat, was in der Figur 8 darstellt ist, liegt der Rasthaken 10 noch immer an der Innenwand 14 des Einschubträgers 4 an. Erst bei einer Verlagerung des Schiebers 7 durch eine Krafteinwirkung auf seine Betätigungsfläche 13 erreicht der Rasthaken 10 eine Stellung, in der der Rasthaken 10 durch die Federkraft der Rastfeder 9 in die Rastausnehmung 11 hineingedrückt wird (Figur 9). Durch die Lageveränderung des Schiebers 7 wird zugleich das Federelement 8 ein Stück weit gespannt.

Nach dem Wegfall der Krafteinwirkung auf die Betätigungsfläche 13 schiebt das Federelement 8 den Schieber 7 zurück in die Richtung seiner Ausgangslage, welche der Schieber 7 aber nicht erreichen kann, da sich der senkrechte Abschnitt des Rasthakens 10 an einer Kante der Rastausnehmung 11 einhakt (Figur 10).

Die Federkraft des in dieser Position des Schiebers 7 noch teilweise gespannten Federelements 8 wirkt nun sowohl in Richtung auf den durch den Rasthaken 10 arretierten Schieber 7 als auch auf das Modulgehäuse 2, dessen Stirnwand 5 so durch das Federelement 8 an die Fläche 6 der Bedienblende 3 gepresst wird. Hierdurch ist eine kraftschlüssige enge Ankopplung des Modulgehäuses 2 an die Rückseite der Bedienblende 3 erreicht.

Das Entriegeln des Modulgehäuses 2 kann, vorzugsweise unter Zuhilfenahme eines in die Rastausnehmung 11 einschiebbaren Werkzeugs, durch ein manuelles Herausdrücken des Rasthakens 10 aus der Rastausnehmung 11 in Richtung auf das Modulgehäuse 2 erfolgen.

### Bezugszeichen

- 1: Bedienblende
- 2: Modulgehäuse
- 3: Bedienfläche
- 4: Einschubträger
- 5: Stirnwand
- 6: Fläche
- 7: Schieber
- 8: Federelement
- 9: Rastfeder
- 10: Rasthaken
- 11: Rastausnehmung
- 12: Kontaktelement
- 13: Betätigungsflächen
- 14: Innenwand
- 15: Anlaufschräge
- 16: Führungselemente
- 17: Grundkörper
- 18: Kontaktfeder (Kontaktelement)
- 19: Ausnehmungen
- 20: Gehäusekörper
- 21: Sensorelemente
- 22: Schaltungsträger

## Patentansprüche

1. Bedienanordnung mit einem Modulgehäuse (2) und mit einem Einschubträger (4),
mit mindestens einer aus dem Modulgehäuse (2) ragenden Rastfeder (9), durch die das Modulgehäuse (2) mit dem Einschubträger (4) verriegelbar ist, und die zum Einschieben des Modulgehäuses (2) in den Einschubträger (4) und zum Entriegeln in das Modulgehäuse (2) versenkbar ist,
wobei die Rastfeder (9) an einen Schieber (7) gekoppelt ist, der an dem Modulgehäuse (2) gelagert ist und gegen die Kraft eines Federelements (8) in der Einschubrichtung des Modulgehäuses (2) verschiebbar ist,
**dadurch gekennzeichnet,**
**dass** der Einschubträger (4) auf einer Seite mit einer Bedienblende (1) verbunden ist, die auf ihrer Vorderseite eine Bedienfläche (3) ausbildet,
**dass** die Rastfeder (9) einen Rasthaken (10) aufweist, der durch eine Verschiebung des Schiebers (7) in eine Position bewegbar ist, in der die Rastfeder (9) den Rasthaken (10) in eine Rastausnehmung (11) oder Hinterschneidung des Einschubträgers (4) hineindrückt, und
**dass** durch die Verschiebung des Schiebers (7) das Federelement (8) gespannt wird, welches durch seine zwischen Modulgehäuse (2) und Schieber (7) wirkende Federkraft den Schieber (7) in seine Ursprungsposition zurückzutreiben versucht und dabei, wegen des mit dem Schieber (7) verbundenen Rasthakens (10), der am Einschubträger (4) eingehakt ist, umgekehrt eine Kraftwirkung auf das Modulgehäuse (2) ausübt, die eine Stirnwand (5) des Modulgehäuse (2) gegen eine Fläche (6) an der Rückseite der Bedienblende (1) drückt.

2. Bedienanordnung nach Anspruch 1, **dadurch gekennzeichnet, dass** der Rasthaken (10) eine Anlaufschräge (15) aufweist, die beim Einschieben des Modulgehäuses (2) in den Einschubträger (4) auf den Einschubträger (4) trifft und dadurch den Rasthaken (10) gegen die Kraft der Rastfeder (9) verschiebt.

3. Bedienanordnung nach Anspruch 1, **dadurch gekennzeichnet, dass** die Rastfeder (9) und der Schieber (7) einstückig miteinander ausgebildet sind.

4. Bedienanordnung nach Anspruch 1, **dadurch gekennzeichnet, dass** der Schieber (7) aus Kunststoff ausgebildet ist

5. Bedienanordnung nach Anspruch 1, **dadurch gekennzeichnet, dass** der Schieber (7) aus Metall ausgebildet ist.

6. Bedienanordnung nach Anspruch 5, **dadurch gekennzeichnet, dass** der Schieber (7) einstückig mindestens ein elektrisches Kontaktelement (12, 18) ausbildet, dass mit elektrischen Komponenten im Inneren des Modulgehäuses (2) elektrisch verbunden ist.

7. Bedienanordnung nach Anspruch 6, **dadurch gekennzeichnet, dass** das elektrische Kontaktelement (12, 18) federnd ausgebildet ist.

8. Bedienanordnung nach Anspruch 1, **dadurch gekennzeichnet, dass** der Schieber (7) und das Federelement (8) einstückig miteinander ausgebildet sind.

9. Bedienanordnung nach Anspruch 1, **dadurch gekennzeichnet, dass** der Schieber (7) und das Federelement (8) nicht einstückig miteinander ausgebildet sind und dass das Federelement (8) als eine Zylinderfeder, Schraubenfeder oder Blattfeder ausgebildet ist.

10. Bedienanordnung nach Anspruch 1, **dadurch gekennzeichnet, dass** im Bereich der Stirnwand (5) des Modulgehäuses (2) mindestens ein kapazitives Sensorelement (21) angeordnet ist.

## Claims

1. Operating arrangement with a module enclosure (2) and with a withdrawable frame (4),
having at least one catch spring (9) projecting from the module enclosure (2) by means of which the module enclosure (2) can be latched to the withdrawable frame (4) and which can be retracted into the module enclosure (2) for inserting the module enclosure (2) into the withdrawable frame (4) and for unlocking purposes,
whereby the catch spring (9) is coupled to a slider (7) which is supported on the module enclosure (2) and is displaceable against the force of a spring element (8) in the direction of inserting the module enclosure (2),
**characterised in that**
the withdrawable frame (4) is connected on one side to an operating panel (1) which forms a control surface (3) on its front face,
that the catch spring (9) has a latching hook (10) which can be moved by a displacement of the slider (7) into a position in which the catch spring (9) presses the latching hook (10) into a catch recess (11) or indentation on the withdrawable frame (4), and
that the displacement of the slider (7) causes a tensioning of the spring element (8) which tries to drive the slider (7) back into its original position by means of its spring force acting between the module enclosure (2) and the slider (7) and, in the process, due to the latching hook (10) being connected to the slider (7) which is hooked into the withdrawable frame, inversely exerts a force action on the module enclosure (2) which presses a front face (5) of the module enclosure (2) against a surface area (6) on the rear of the operating panel (1).

2. Operating arrangement according to Claim 1, **characterised in that** the latching hook (10) has a ramp surface (15) which contacts the withdrawable frame (4) upon inserting the module enclosure (2) into the withdrawable frame (4), thus displacing the latching hook (10) against the force of the catch spring (9).

3. Operating arrangement according to Claim 1, **characterised in that** the catch spring (9) and the slider (7) together are of a one-piece design.

4. Operating arrangement according to Claim 1, **characterised in that** the slider (7) is designed in plastic.

5. Operating arrangement according to Claim 1, **characterised in that** the slider (7) is designed in metal.

6. Operating arrangement according to Claim 5, **characterised in that** the slider (7) forms at least one electrical contact element (12, 18) in a one-piece design which is electrically connected to electrical components in the interior of the module enclosure (2).

7. Operating arrangement according to Claim 6, **characterised in that** the electrical contact element (12, 18) is of an elastic design.

8. Operating arrangement according to Claim 1, **characterised in that** the slider (7) and the spring element (8) together are of a one-piece design.

9. Operating arrangement according to Claim 1, **characterised in that** the slider (7) and the spring element (8) are not of a one-piece design together and that the spring element (8) is designed as a cylindrical spring, a helical spring or a leaf spring.

10. Operating arrangement according to Claim 1, **characterised in that** at least one capacitive sensor element (21) is located in the vicinity of the front face (5) of the module enclosure (2).

## Revendications

1. Système de commande avec un boîtier de module (2) et avec un support d'insertion (4),
avec au moins un ressort d'arrêt (9), en saillie hors du boîtier de module (2), au moyen duquel le boîtier de module (2) peut être verrouillé avec le support d'insertion (4), et qui, pour l'insertion du boîtier de module (2) dans le support d'insertion (4), ainsi que pour le déverrouillage, peut être noyé dans le boîtier de module (2),
sachant que le ressort d'arrêt (9) est couplé avec un coulisseau (7), qui est monté sur le boîtier de module (2) et qui peut être déplacé, contre la force d'un élément élastique (8), dans la direction d'insertion du boîtier de module (2),
**caractérisé en ce que**
le le support d'insertion (4) est relié, d'un côté, à un tableau de commande (1), qui, sur sa face antérieure, présente une surface de commande (3),
le ressort d'arrêt (9) présente un crochet d'encliquetage (10), qui, par déplacement du coulisseau (7), peut être amené dans une position, dans laquelle le ressort d'arrêt (9) presse le crochet d'encliquetage (10) dans un évidement d'encliquetage (11) ou dans une contre-dépouille du support d'insertion (4), et
le déplacement du coulisseau (7) tend l'élément élastique (8), dont la force élastique, qui agit entre le boîtier de module (2) et le coulisseau (7), cherche à ramener le coulisseau (7) dans sa position initiale et, ce faisant, en raison du crochet d'encliquetage (10), qui, relié au coulisseau (7), est accroché au support d'insertion (4), exerce, inversement, sur le boîtier de module (2), une force, qui presse une paroi frontale (5) du boîtier de module (2) contre une surface (6) de la face arrière du tableau de commande (1).

2. Système de commande selon la revendication 1, **caractérisé en ce que** le crochet d'encliquetage (10) présente un chanfrein d'insertion (15), qui, lors de l'insertion du boîtier de module (2) dans le support d'insertion (4) rencontre le support d'insertion (4) et déplace ainsi le crochet d'encliquetage (10) contre la force du ressort d'arrêt (9).

3. Système de commande selon la revendication 1, **caractérisé en ce que** le ressort d'arrêt (9) et le coulisseau (7) sont formés ensemble d'une seule pièce.

4. Système de commande selon la revendication 1, **caractérisé en ce que** le coulisseau (7) est réalisé en matière synthétique.

5. Système de commande selon la revendication 1, **caractérisé en ce que** le coulisseau (7) est réalisé en métal.

6. Système de commande selon la revendication 5, **caractérisé en ce que** le coulisseau (7) forme, d'une seule pièce, au moins un élément de contact électrique (12, 18), qui est raccordé, électriquement, à des composants électriques, à l'intérieur du boîtier de module (2).

7. Système de commande selon la revendication 6, **caractérisé en ce que** l'élément de contact électrique (12, 18) est de conception élastique.

8. Système de commande selon la revendication 1, **caractérisé en ce que** le coulisseau (7) et l'élément élastique (8) sont formés ensemble d'une seule pièce.

9. Système de commande selon la revendication 1, **caractérisé en ce que** le coulisseau (7) et l'élément élastique (8) ne sont pas formés ensemble d'une seule pièce et que l'élément élastique (8) est réalisé sous la forme d'un ressort cylindrique, d'un ressort à vis ou d'un ressort à lames.

10. Système de commande selon la revendication 1, **caractérisé en ce que**, dans la section de la paroi frontale (5) du boîtier de module (2), est disposé un élément de capteur capacitif (21).
